# EUROPÄISCHE PATENTSCHRIFT

(11) **EP 4 251 891 B1**
(45) Veröffentlichungstag und Bekanntmachung des Hinweises auf die Patenterteilung: **18.12.2024**
(21) Anmeldenummer: 21805463.3
(22) Anmeldetag: 02.11.2021
(51) Int. Cl.: F16B 13/06, F16B 13/08

(54) **SPREIZANKER UND VERFAHREN ZUM AUFSPREIZEN DES SPREIZANKERS**
EXPANSION ANCHOR AND METHOD FOR EXPANDING THE EXPANSION ANCHOR
DISPOSITIF D'ANCRAGE À EXPANSION ET PROCÉDÉ D'EXPANSION DE L'ÉLÉMENT D'ANCRAGE À EXPANSION

(30) Priorität: 25.11.2020 DE 102020131152; 20.08.2021 DE 102021121605
(43) Veröffentlichungstag der Anmeldung: 04.10.2023
(73) Patentinhaber: fischerwerke GmbH & Co. KG, 72178 Waldachtal (DE)
(72) Erfinder: HACKER, Oliver, 72227 Egenhausen (DE); WÄLDER, Jonas, 71069 Sindelfingen (DE); HIRSCHLE, Tobias, 71131 Jettingen (DE); KIRN, Regina, 72213 Altensteig (DE); HORNBERGER, Marco, 72285 Pfalzgrafenweiler (DE); GANTKE, Reinhard, 72663 Großbettlingen (DE); BOHNET, Hartmut, 72178 Waldachtal (DE)
(86) Internationale Anmeldenummer: PCT/EP2021/080319
(87) Internationale Veröffentlichungsnummer: WO 2022/111947

(56) Entgegenhaltungen:
- DE-A1- 102011 007 570
- DE-A1- 3 124 685
- US-A1- 2017 145 684

## Beschreibung

Die Erfindung betrifft einen Spreizanker mit den Merkmalen des Oberbegriffs des Anspruchs 1 und ein Verfahren zum Aufspreizen des Spreizankers mit den Merkmalen des Oberbegriffs des Anspruchs 7.

Die Offenlegungsschrift DE 31 24 685 A1 offenbart einen Spreizanker mit einem Ankerschaft, einem mit dem Ankerschaft einstückigen, kegelstumpfförmigen Spreizkörper und einer auf dem Ankerschaft verschieblichen Spreizhülse. Durch Längsschlitze, die an einem vorderen, dem Spreizkörper zugewandten Ende offen sind, ist die Spreizhülse in Spreizlaschen unterteilt, die sich über einen begrenzten Axialabschnitt in einer Längsrichtung der Spreizhülse erstrecken. Beispielsweise durch Aufschrauben einer Mutter auf ein Schraubengewinde des Ankerschafts lassen sich die Spreizlaschen der Spreizhülse auf den Spreizkörper schieben und werden von dem Spreizkörper aufgespreizt.

Die Offenlegungsschrift DE 10 2011 007 570 A1 offenbart einen Spreizdübel, der einen Ankerbolzen, eine Spreizhülse und wenigstens eine Exzentergeometrie aufweist, wobei mittels einer Rotationsbewegung des Ankerbolzens eine Aufspreizung der Spreizhülse ausführbar ist.

Aufgabe der Erfindung ist, ein Aufspreizverhalten eines Spreizankers zu verbessern, sowie ein Verfahren zum Aufspreizen des Spreizankers vorzuschlagen.

Diese Aufgabe wird erfindungsgemäß durch die Merkmale der Ansprüche 1 und 7 gelöst. Der erfindungsgemäße Spreizanker weist einen Spreizkörper und eine Spreizhülse auf. Die Spreizhülse ist durch Längsschlitze in Spreizlaschen unterteilt, wobei die Längsschlitze vorzugsweise an einem vorderen, dem Spreizkörper zugewandten Ende offen sind, so dass die Spreizlaschen an ihren vorderen, dem Spreizkörper zugewandten Enden frei sind und somit einen Kragarm bilden. Die Längsschlitze können achsparallel oder in einem Winkel zu Achsparallelen der Spreizhülse verlaufen, wobei sich der Winkel auf einer Länge der Längsschlitze ändern kann. Beispielsweise können die Längsschlitze wendelförmig, wellenförmig oder zick-zack-förmig verlaufen.

Der Spreizkörper weist für jede Spreizlasche eine Spreizfläche mit einer ersten Steigung in einer Längsrichtung beziehungsweise Achsrichtung des Spreizankers, Spreizkörpers, der Spreizhülse oder eines Ankerschafts des Spreizankers auf, so dass durch eine axiale Bewegung der Spreizhülse in Bezug zum Spreizkörper in Richtung des Spreizkörpers die Spreizlaschen der Spreizhülse auf die Spreizfläche des Spreizkörpers schiebbar und dadurch aufspreizbar sind. "Steigung" bedeutet hier eine Vergrößerung eines radialen Abstands der Spreizflächen von einer Längsachse des Spreizkörpers in einer Richtung, beispielsweise in der Längsrichtung oder in einer Umfangsrichtung. Beim Schieben der Spreizlaschen auf die Spreizflächen drücken die Spreizflächen aufgrund ihrer Steigung die Spreizlaschen radial auseinander, was als Aufspreizen der Spreizlaschen, der Spreizhülse beziehungsweise des Spreizankers aufgefasst werden kann. Durch das Aufspreizen lässt sich der Spreizanker in einem Ankerloch verankern.

Außer der ersten Steigung in der Längsrichtung oder Achsrichtung weisen die Spreizflächen des Spreizkörpers des erfindungsgemäßen Spreizankers eine zweite Steigung in einer Umfangsrichtung auf, die der ersten Steigung überlagert ist. Das heißt, der radiale Abstand der Spreizflächen von der Längsachse des Spreizkörpers vergrößert sich nicht nur in axialer Richtung, sondern zudem auch in der Umfangsrichtung. Die Spreizlaschen sind daher nicht nur durch eine axiale Verschiebung in Bezug zum Spreizkörper, sondern auch durch eine Drehung in Bezug zu dem Spreizkörper aufspreizbar, oder auch durch eine Kombination von Verschiebung und Drehung, wenn die Spreizlaschen an den Spreizflächen anliegen. Das Aufspreizen erfolgt insbesondere durch eine Axialbewegung des Spreizkörpers relativ zur Spreizhülse, wobei der Axialbewegung eine Drehbewegung überlagert ist. Die Drehrichtung des Spreizkörpers in Bezug zu den Spreizlaschen in Umfangsrichtung, die die Spreizlaschen aufspreizt, wird nachfolgend auch als "Aufspreizdrehrichtung" bezeichnet.

Durch die erfindungsgemäße Ausbildung wird ein ungewolltes Mitdrehen des Spreizkörpers beim Verspannen des erfindungsgemäßen Spreizankers gegen ein Anbauteil, beispielsweise beim Aufdrehen einer Mutter auf einen mit dem Spreizkörper verbundenen Ankerschaft, in ein zusätzliches Aufspreizen umgesetzt, was ein weiteres Mitdrehen verhindert.

Der Spreizkörper kann beispielsweise einem Kegelstumpf ähnlich ausgeführt sein, wobei eine Mantelfläche in Umfangsrichtung in Segmente unterteilt ist, die die Spreizflächen bilden und die jeweils die erste und die zweite Steigung aufweisen. Die Höhe des Kegelstumpfs verläuft insbesondere parallel zur Längsachse oder ist mit dieser identisch Der radiale Abstand der Spreizflächen von der Längsachse des Spreizkörpers vergrößert sich dadurch sowohl in der axialen Richtung, als auch von einem Segment bis zu einem nächsten Segment in Umfangsrichtung, das heißt von einer Spreizfläche bis zu einer in Umfangsrichtung nächsten Spreizfläche in der Umfangsrichtung, wobei zwischen des Spreizflächen insbesondere eine Art Absatz oder Stufe angeordnet ist. Die Spreizflächen können als räumlich abgesetzte und separate Spreizflächen aufgefasst werden.

Der Spreizkörper kann beispielsweise auch einem Pyramidenstumpf ähnlich ausgeführt sein, wobei Mantelflächen des Pyramidenstumpfs die Spreizflächen bilden. Die Spreizflächen können eben oder in Umfangsrichtung gewölbt sein. Auch sie weisen eine Steigung sowohl in der axialen Richtung als auch in der Umfangsrichtung auf, das heißt ihr radialer Abstand von der Längsachse des Spreizkörpers vergrößert sich sowohl in der axialen Richtung als auch in der Umfangsrichtung.

In der axialen Richtung können die Spreizflächen eben, ballig oder hohlrund sein. Die Erfindung ist nicht auf die beschriebenen Formen des Spreizkörpers beschränkt.

Vorzugsweise weist der erfindungsgemäße Spreizanker einen mit dem Spreizkörper drehfesten Ankerschaft mit einem Schraubengewinde auf, auf das sich eine Mutter zum Schieben der Spreizhülse in Richtung des Spreizkörpers, das heißt zum Aufspreizen und/oder zu einer Befestigung eines auf den Ankerschaft aufgesetzten Anbauteils schrauben lässt. Die Drehfestigkeit, kann durch Form- oder Reibschluss entstehen, oder durch eine einstückige Ausbildung. Insbesondere ist der Spreizkörper mit dem Ankerschaft dreh- und axialfest, insbesondere aufgrund einer einstückigen Ausbildung. Eine Gewindesteigung des Schraubengewindes ist so gerichtet, dass ein Moment, welches die Mutter durch Reibung am Schraubengewinde auf den Ankerschaft ausübt, wenn sie in Richtung des Spreizkörpers geschraubt wird, den Spreizkörper in der Aufspreizdrehrichtung beaufschlagt.

Eine Ausgestaltung der Erfindung sieht am Spreizkörper ein Drehwiderlager für die Spreizhülse vor, das die Drehung der Spreizhülse in Bezug auf den Spreizkörper entgegen der Aufspreizdrehrichtung begrenzt. Das Drehwiderlager kann durch Stufen an einem Übergang von einer Spreizfläche zu einer benachbarten Spreizfläche gebildet sein, an denen die Spreizlaschen zur Anlage kommen, wenn die Spreizhülse entgegen der Aufspreizdrehrichtung in Bezug zum Spreizkörper gedreht wird. Die Stufen können beispielsweise in Axialebenen zur Längsachse liegen, die Steigungsfläche der Stufe also radial zur Längsachse verlaufen sie können aber auch beispielsweise schräg zu Axialebenen verlaufen oder gebogen sein. Das Drehwiderlager verhindert ein Rückdrehen der Spreizhülse entgegen der Aufspreizdrehrichtung über eine Ausgangsstellung hinaus, in der die Spreizlaschen nicht oder jedenfalls nicht durch Drehung in Bezug auf den Spreizkörper aufgespreizt sind.

Die Steigung der Spreizflächen beträgt beispielsweise etwa 10° in der axialen Richtung (= erste Steigung) und beispielsweise etwa das 0,068-fache eines Nenndurchmessers des Spreizankers in der Umfangsrichtung über eine Erstreckung jeweils einer Spreizfläche in der Umfangsrichtung (= zweite Steigung). Der Nenndurchmesser ist beispielsweise ein Durchmesser des Schraubengewindes des Ankerschafts, ein Außendurchmesser der nicht-aufgespreizten Spreizhülse, beziehungsweise der Spreizhülse außerhalb der Spreizlaschen, oder ein Durchmesser an einem durchmessergrößeren Ende des Spreizkörpers. "Etwa" bedeutet eine Toleranz von beispielsweise 10 % oder 20 %, das heißt die erste Steigung (α) der Spreizflächen in der axialen Richtung beträgt beispielsweise zwischen 8° und 12°, insbesondere zwischen 9° und 11°, und die zweite Steigung (P) in der Umfangsrichtung zwischen dem 0,055- bis 0,08-fachen und insbesondere zwischen dem 0,06- und 0,075-fachen des Nenndurchmessers.

Damit die nicht-aufgespreizte Spreizhülse einen ausreichenden Halt in einem Ankerloch zu einem Einziehen des Spreizkörpers zwischen die Spreizlaschen und/oder zu einem Drehen des Spreizkörpers zwischen den Spreizlaschen zum Aufspreizen aufweist, sieht eine Ausgestaltung der Erfindung eine oder mehrere Dreh- und Schiebesicherungslaschen vor, die beispielsweise in der axialen Richtung und/oder der Umfangsrichtung schräg nach außen von einem Grundkörper der Spreizhülse abstehen. Der Grundkörper weist in einem nicht-aufgespreizten Zustand der Spreizhülse insbesondere eine zylindrische Form auf. Die Dreh- und Schiebesicherungslasche/n stehen radial nach außen über eine Mantelfläche beziehungsweise eine Umfangsfläche des Grundkörpers der Spreizhülse im Bereich der Dreh- Schiebesicherungslasche/n über, so dass sie an einer Lochwand des Ankerlochs anliegen und die nicht-aufgespreizte Spreizhülse im Ankerloch halten.

Zum Verankern des erfindungsgemäßen Spreizankers sieht das erfindungsgemäße Verfahren vor, den Spreizanker mit dem Spreizkörper voraus in ein Ankerloch in einem Ankergrund einzubringen und im Ankerloch aufzuspreizen. Dazu wird im Ankerloch die Spreizhülse in Bezug zum Spreizkörper axial verschoben, das heißt dass die Spreizhülse zum Spreizkörper und/oder der Spreizkörper zur Spreizhülse hin verschoben wird, so dass die Spreizlaschen auf die Spreizflächen gelangen und aufgespreizt werden. Zudem kann der Spreizkörper zum Aufspreizen in Umfangsrichtung relativ zur Spreizhülse in Aufspreizdrehrichtung gedreht werden, insbesondere während und/oder nach der axialen Bewegung der Spreizhülse relativ zum Spreizkörper.

Eine Ausgestaltung des erfindungsgemäßen Verfahrens sieht vor, dass eine Mutter auf das beziehungsweise auf dem Schraubengewinde des Ankerschafts gedreht wird, so dass sie sich in Richtung des Spreizkörpers bewegt, der sich in dem Ankerloch befindet. Insbesondere kann dabei die Spreizhülse in axiale Richtung relativ zum Spreizkörper bewegt und aufgespreizt werden. Aufgrund von Reibung zwischen der Mutter und dem Schraubengewinde übt die Mutter bei ihrer Drehung ein Moment auf den Ankerschaft aus, das der Ankerschaft auf den Spreizkörper überträgt und zu einer Bewegung in Aufspreizdrehrichtung führt. Dieses Moment vergrößert oder verstärkt somit aufgrund der zweiten Steigung der Spreizflächen in der Umfangsrichtung die Aufspreizung der Spreizlaschen. Diese Drehung in Aufspreizrichtung kann insbesondere gleichzeitig mit der axialen Bewegung vom Spreizkörper relativ zur Spreizhülse oder nach der axialen Bewegung erfolgen.

Das Ankerloch ist ein beispielsweise gebohrtes, beispielsweise zylindrisches Loch in einem Ankergrund aus beispielsweise Beton oder Stein. Sofern das Ankerloch ein Sackloch ist, sieht eine Ausgestaltung der Erfindung vor, den Spreizkörper zum Aufspreizen auf einen Lochgrund aufzusetzen, wobei der Lochgrund eine Art axiales Widerlager für das vordere, am Lochgrund anstehende Ende des Spreizkörpers bildet, das den Spreizkörper bei einem Schieben der Spreizhülse in seine Richtung und Aufschieben der Spreizlaschen auf die Spreizflächen des Spreizkörpers axial hält.

Das Ankerloch kann bei Ausgestaltungen der Erfindung eine Hinterschneidung aufweisen, in die hinein oder in der die Spreizlaschen aufgespreizt werden, so dass der Spreizanker durch das Aufspreizen kraftschlüssig (reibschlüssig) und durch Hintergriff der Hinterschneidung formschlüssig in dem Ankerloch verankert ist.

Eine Ausgestaltung der Erfindung sieht vor, den Spreizkörper zum Aufspreizen der Spreizlaschen in Bezug zur Spreizhülse in der Aufspreizdrehrichtung zu drehen. Das Aufspreizen ist ausschließlich durch Drehen des Spreizkörpers in Bezug zur Spreizhülse oder durch Drehen zusätzlich zu der Bewegung in axialer Richtung möglich. Ein Moment zum Drehen des Spreizkörpers kann an dem mit dem Spreizkörper drehfesten Ankerschaft aufgebracht werden.

Die vorstehend in der Beschreibung genannten Merkmale und Merkmalskombinationen, Ausführungen und Ausgestaltungen der Erfindung, sowie die nachfolgend in der Figurenbeschreibung genannten und/oder in einer Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar. Es sind Ausführungen der Erfindung möglich, die nicht alle Merkmale eines abhängigen Anspruchs aufweisen. Auch können einzelne Merkmale eines Anspruchs durch andere offenbarte Merkmale oder Merkmalskombinationen ersetzt werden. Ausführungen der Erfindung, die nicht alle Merkmale des oder der Ausführungsbeispiele, sondern einen grundsätzlich beliebigen Teil der gekennzeichneten Merkmale eines Ausführungsbeispiels gegebenenfalls in Kombination mit einem, mehreren oder allen Merkmalen eines oder mehrerer weiterer Ausführungsbeispiele aufweisen, sind möglich.

Die Erfindung wird nachfolgend anhand eines in der Zeichnung dargestellten Ausführungsbeispiels näher erläutert. Es zeigen:
- Figur 1: ein erstes Ausführungsbeispiel eines erfindungsgemäßen Spreizankers;
- Figur 2: einen Spreizkörper des Spreizankers aus Figur 1 in größerer Darstellung;
- Figur 3: ein zweites Ausführungsbeispiel eines erfindungsgemäßen Spreizankers; und
- Figur 4: eine Stirnansicht auf ein vorderes Ende des Spreizankers aus Figur 3.

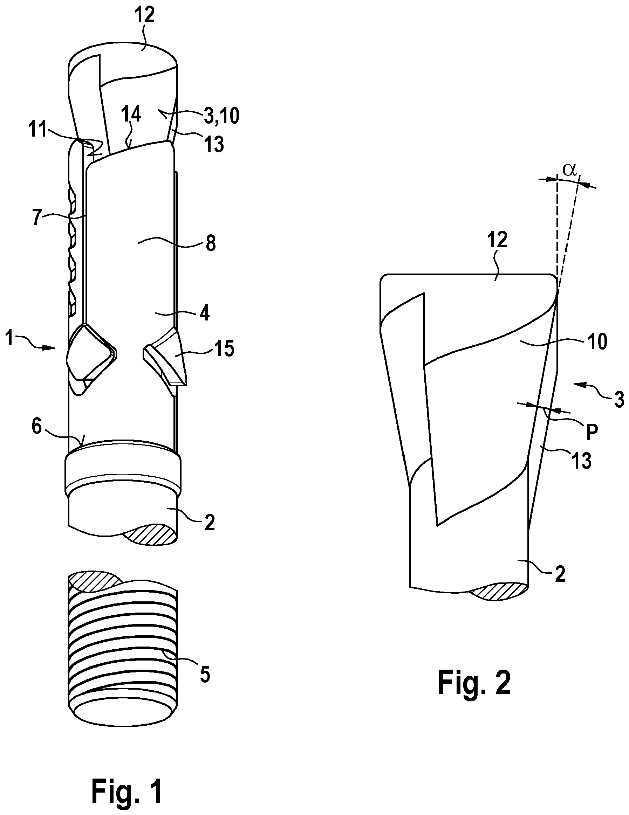

Der in Figur 1 dargestellte, erfindungsgemäße Spreizanker 1 weist einen Ankerschaft 2, einen Spreizkörper 3 und eine Spreizhülse 4 auf. An einem dem Spreizkörper 3 fernen, hinteren Ende weist der Ankerschaft 2 ein Schraubengewinde 5 auf. Mit axialem Abstand von dem Spreizkörper 3 weist der Ankerschaft 2 eine Ringstufe als axiales Widerlager 6 für die Spreizhülse 4 auf. Die Spreizhülse 4 ist zwischen dem Spreizkörper 3 und dem Widerlager 6 axial verschiebbar auf dem Ankerschaft 2 angeordnet.

Die Spreizhülse 4 ist aus einem ebenen Blech gestanzt oder beispielsweise auch durch Laserschneiden aus dem ebenen Blech getrennt und zu der zylinderrohrförmigen Hülse gebogen.

Die Spreizhülse 4 weist Längsschlitze 7 auf, die sie in Spreizlaschen 8 unterteilen, die sich in einer Längsrichtung der Spreizhülse 4 erstrecken und in Umfangsrichtung der Spreizhülse 4 nebeneinander angeordnet sind. Die Längsschlitze 7 beginnen an einem vorderen Ende der Spreizhülse 4 und erstrecken sich - im Ausführungsbeispiel - über etwa 2/3 einer axialen Länge der Spreizhülse 4. Als "vorderes Ende" wird hier das dem Spreizkörper 3 zugewandte Ende der Spreizlaschen 8 und der Spreizhülse 4 bezeichnet. Im Ausführungsbeispiel verlaufen die Längsschlitze 7 achsparallel, sie können allerdings beispielsweise auch wendelförmig, wellenförmig oder zick-zack-förmig verlaufen (nicht dargestellt).

Der Spreizkörper 3 weist eine einem Kegelstumpf ähnliche Form auf und schließt einstückig mit seinem durchmesserkleineren Ende koaxial an den Ankerschaft 2 an, der im Anschluss an den Spreizkörper 3 den gleichen Durchmesser wie das durchmesserkleinere Ende des Spreizkörpers 3 aufweist. Durch die Einstückigkeit ist der Spreizkörper 3 dreh- und axialfest mit dem Ankerschaft 2.

Abweichend von einem Kegelstumpf weist der Spreizkörper 3 des erfindungsgemäßen Spreizankers 1 keine in Umfangsrichtung stetig durchgehende Umfangsfläche auf, sondern der Spreizkörper 3 weist für jede Spreizlasche 8 der Spreizhülse 4 eine eigene Spreizfläche 10 auf, die sich über einen Teil des Umfangs erstreckt. Die Spreizflächen 10 können als räumlich abgesetzte, separate Spreizflächen 10 aufgefasst werden. Die Spreizflächen 10 weisen - wie ein Kegelstumpf - eine erste Steigung (α) in axialer Richtung und - abweichend von einem Kegelstumpf - eine zweite Steigung (P) in der Umfangsrichtung auf (Figur 2). Die zweite Steigung (P) ist der ersten Steigung (α) überlagert. Das bedeutet, dass sich ein radialer Abstand der Spreizflächen 10 von einer Längsachse des Spreizkörpers 3 sowohl in einer axialen Richtung als auch in der Umfangsrichtung ändert. Der radiale Abstand der Spreizflächen 10 von der Längsachse des Spreizkörpers 3 vergrößert sich nach vorn in Richtung eines vorderen Endes 12 des Spreizkörpers 3 und er vergrößert sich axial auf das hintere Ende des Ankerschafts 2 gesehen entgegen einem Uhrzeigersinn, das heißt nach links. Das gilt, wenn das Schraubengewinde 5 auf dem Ankerschaft 2 ein Rechtsgewinde ist. Für ein Linksgewinde wäre die zweite Steigung (P) der Spreizflächen 10 in der Umfangsrichtung entgegengesetzt. Als "vorderes Ende" 12 des Spreizkörpers 3 wird das durchmessergrößere Ende des Spreizkörpers 3 bezeichnet, das dem Ankerschaft 2 abgewandt ist.

Im Ausführungsbeispiel weisen die Spreizflächen 10 eine erste Steigung (α) von 10° in axialer Richtung zum vorderen Ende 12 des Spreizkörpers 3 auf, das zugleich ein vorderes Ende 12 des Spreizankers 1 ist, und eine zweite Steigung (P) in der Umfangsrichtung entgegen einer Aufspreizdrehrichtung von dem 0,068-fachen eines Außendurchmessers des Schraubengewindes 5. Abweichungen von ±1° oder ±2° beziehungsweise von ±10 % oder ±20 % sind möglich.

In der Umfangsrichtung steigen die Spreizflächen 10 so, dass ein Moment, das eine nicht dargestellte Mutter, die auf dem Schraubengewinde 5 des Ankerschafts 2 in Richtung des Spreizkörpers 3 geschraubt wird, durch Reibung mit dem Schraubengewinde 5 ein Moment auf den Ankerschaft 2 ausübt, das den mit dem Ankerschaft 2 drehfesten Spreizkörper 3 im Sinne eines Aufspreizens der Spreizlaschen 8 beaufschlagt. Diese Drehrichtung wird hier auch als "Aufspreizdrehrichtung" bezeichnet.

In der Umfangsrichtung gehen die Spreizflächen 10 jeweils mit einer Stufe in eine benachbarte Spreizfläche 10 über. Die Stufen, die sich im Ausführungsbeispiel in Axialebenen des Spreizkörpers 3 befinden, bilden Drehwiderlager 13 für die Spreizhülse 4, die eine Drehung der Spreizhülse 4 in Bezug auf den Spreizkörper 3 durch Anlage von Längsrändern 11 der Spreizlaschen 8 entgegen einer Aufspreizdrehrichtung begrenzen. Aufgrund ihrer Form und Anordnung können die Spreizflächen 10 als räumlich abgesetzt und separat aufgefasst werden. In der Umfangsrichtung weisen die Spreizflächen 10 die zweite Steigung (P) auf ihrer Erstreckung in der Umfangsrichtung von Stufe zu Stufe auf. Die die Drehwiderlager 13 bildenden Stufen weisen in radialer Richtung des Spreizkörpers 3 die Höhe der zweiten Steigung (P) der Spreizflächen 10 in der Umfangsrichtung auf.

Zum Aufspreizen, das heißt zu einem radialen Auseinanderdrücken der Spreizlaschen 8, wird der Spreizkörper 3 zwischen die Spreizlaschen 8 gezogen oder es werden umgekehrt die Spreizlaschen 8 auf den Spreizkörper 3 geschoben und/oder es wird der Spreizkörper 3 in der Aufspreizdrehrichtung in Bezug auf die an seinen Spreizflächen 10 anliegenden Spreizlaschen 8 gedreht. Als "Aufspreizdrehrichtung" wird die Drehrichtung des Spreizkörpers 3 in Bezug auf die Spreizhülse 4 beziehungsweise die Spreizlaschen 8 bezeichnet, die aufgrund der zweiten Steigung (P) der Spreizflächen 10 des Spreizkörpers 3 in der Umfangsrichtung die Spreizlaschen 8 radial auseinander drückt, das heißt aufspreizt. Die Spreizlaschen 8 lassen sich also sowohl durch eine axiale Bewegung in Bezug auf den Spreizkörper 3 als auch durch eine Drehung in der Aufspreizrichtung in Bezug auf den Spreizkörper 3 aufspreizen. Eine Kombination von axialer Bewegung und Drehung, die zeitgleich oder zeitversetzt erfolgen kann, vergrößert beziehungsweise verstärkt die Aufspreizung.

Vordere Ränder 14 der Spreizlaschen 8 sind im Ausführungsbeispiel schräg, was allerdings nicht zwingend für die Erfindung ist. Als vordere Ränder 14 werden die dem Spreizkörper 3 zugewandten Ränder der Spreizlaschen 8 bezeichnet.

Hinter den Spreizlaschen 8 weist die Spreizhülse 4 Dreh- und Schiebesicherungslaschen 15 auf, die schräg in einem spitzen Winkel zur Längsachse der Spreizhülse 4 nach außen stehen. Die Dreh- und Schiebesicherungslaschen 15 stehen radial nach außen über eine Mantelfläche eines zylindrischen Grundkörpers der Spreizhülse 4 in dem die Dreh- und Schiebesicherungslaschen 15 aufweisenden Bereich über. In einem nicht dargestellten Ankerloch liegen die Dreh- und Schiebesicherungslaschen 15 an einer Lochwand an und halten die Spreizhülse 4 so gegen eine Verschiebung und Drehung im Ankerloch, dass der Spreizkörper 3 zwischen die Spreizlaschen 8 gezogen und zwischen den Spreizlaschen 8 gedreht werden kann.

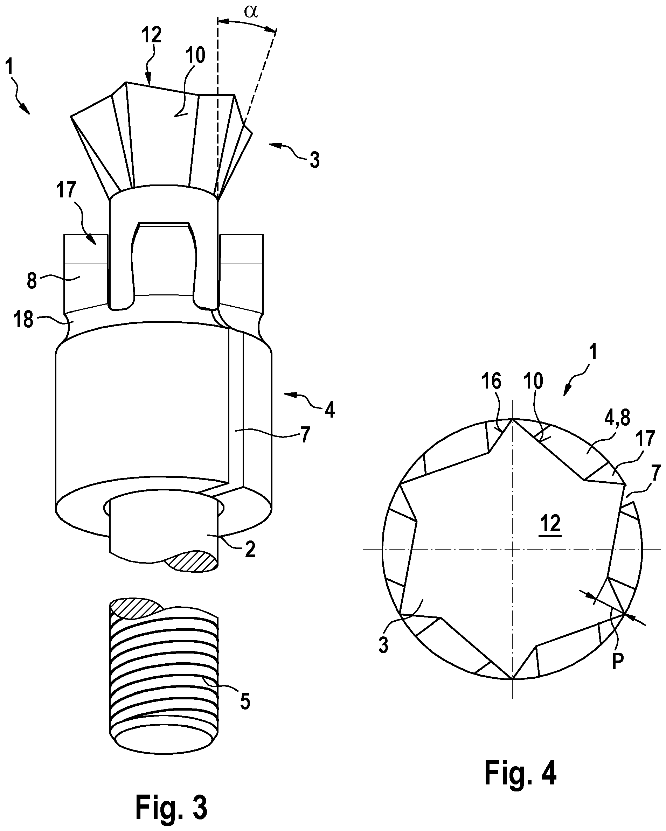

In der nachfolgenden Beschreibung der Figuren 3 und 4 werden für mit Figuren 1 und 2 übereinstimmende Elemente gleiche Bezugszahlen wie in Figuren 1 und 2 verwendet.

Der in Figur 3 dargestellte erfindungsgemäße Spreizanker 1 ist zu einer Verankerung in einem nicht dargestellten, axial kurzen, eine konische Hinterschneidung aufweisenden und als Sackloch ausgeführten Ankerloch in beispielsweise einer Fassadenplatte aus Stein oder einem vergleichbaren Werkstoff vorgesehen. Der Spreizanker 1 weist einen Ankerschaft 2 mit einem Schraubengewinde 5 an einem hinteren Ende und einen Spreizkörper 3 an einem vorderen Ende auf, der dreh- und axialfest, nämlich im Ausführungsbeispiel einstückig, mit dem Ankerschaft 2 ist. Der Spreizkörper 3 ist axial kurz, nämlich vorzugsweise axial nicht länger als ein Außendurchmesser des Schraubengewindes 5.

Der Spreizkörper 3 des Spreizankers 1 aus Figur 3 weist eine pyramidenstumpfartige Form auf. Der Spreizkörper 3 erweitert sich in Richtung eines vorderen, dem Schraubengewinde 5 fernen Endes 12. Er weist eine Anzahl - im Ausführungsbeispiel sechs - ebene Spreizflächen 10 auf, die mit einer ersten Steigung (α) zum vorderen Ende 12 hin schräg auseinander verlaufen. In einer Umfangsrichtung sind die Spreizflächen 10 wie in der Stirnansicht der Figur 4 zu sehen gekippt in einem Winkel zu gedachten Tangenten angeordnet, wodurch die Spreizflächen 10 auch in der Umfangsrichtung eine zweite Steigung (P) aufweisen. Zu einer in der Umfangsrichtung benachbarten Spreizfläche 10 gehen die Spreizflächen 10 mit in einer Längsrichtung verlaufenden Stufen 16, die wie in Figur 4 zu sehen schräg zu Axialebenen des Spreizkörpers 3 verlaufen. Die Spreizflächen 10 sind räumlich abgesetzt und separat voneinander. Anstatt ebener Spreizflächen 10 sind auch in der Umfangsrichtung ballig gewölbte Spreizflächen 10 möglich (nicht dargestellt). In axialer Richtung können die Spreizflächen 10 hohlrund oder ballig gewölbt anstatt eben sein (nicht dargestellt).

Auf dem Ankerschaft 2 ist eine Spreizhülse 4 in Richtung des Spreizkörpers 3 verschiebbar angeordnet. An einem vorderen, dem Spreizkörper 3 zugewandten Ende weist die Spreizhülse 4 Aussparungen 17 auf, wodurch Spreizlaschen 8 gebildet sind. Der Spreizkörper 3 weist für jede Spreizlasche 8 eine Spreizfläche 10 auf. An hinteren Enden der Spreizlaschen 8 weist die Spreizhülse 4 außen eine umlaufende Nut 18 auf, die ein Nachaußenschwenken, das heißt ein Aufspreizen der Spreizlaschen 8 erleichtert.

In der Umfangsrichtung kann die Spreizhülse 4 geschlossen sein, im Ausführungsbeispiel weist sie einen durchgehenden Längsschlitz 7 auf, weil sie aus einem ursprünglich ebenen Blech zu der Spreizhülse 4 gebogen ist.

Zu einer Verankerung, das heißt einer Befestigung in dem nicht dargestellten, konisch hinterschnittenen und als Sackloch ausgeführten Ankerloch in beispielsweise der nicht dargestellten, einen Ankergrund bildenden Fassadenplatte wird der Spreizanker 1 aus Figuren 3 und 4 mit dem Spreizkörper 3 voraus in das Ankerloch eingebracht, bis der Spreizkörper 3 auf einem Lochgrund des Ankerlochs aufsitzt. Anschließend wird die Spreizhülse 4 auf dem Ankerschaft 2 in Richtung des Spreizkörpers 3 geschoben, so dass die Spreizlaschen 8 der Spreizhülse 4 auf die Spreizflächen 10 des Spreizkörpers 3 geschoben werden. Zum Schieben der Spreizhülse 4 auf dem Ankerschaft 2 kann ein nicht dargestelltes, rohrförmiges Werkzeug hinter der Spreizhülse 4 auf den Ankerschaft 2 aufgesetzt und die Spreizhülse 4 beispielsweise mit Hammerschlägen auf das nicht dargestellte Werkzeug in Richtung des Spreizkörpers 3 geschoben werden. Aufgrund der ersten Steigung α der Spreizflächen 10 in der axialen Richtung drücken die Spreizflächen 10 die Spreizlaschen 8 beim Aufschieben auf die Spreizflächen 10 radial auseinander, das heißt die Spreizlaschen 8 werden aufgespreizt. Durch das Aufspreizen treten die Spreizlaschen 8 in Hintergriff in der konischen Hinterschneidung des nicht dargestellten Ankerlochs, wodurch der Spreizanker 1 durch Formschluss und gegebenenfalls zusätzlich durch Kraftschluss (Reibschluss) im Ankerloch in beispielsweise der Fassadenplatte gehalten ist.

Nach dem Aufspreizen wird das nicht dargestellte, rohrförmige Werkzeug vom Ankerschaft 2 abgenommen, ein nicht dargestelltes Anbauteil mit einem Durchgangsloch auf den aus der Fassadenplatte vorstehenden Ankerschaft 2 aufgesetzt und nach dem Anbauteil eine ebenfalls nicht dargestellte Mutter auf das Schraubengewinde 5 des Ankerschafts 2 geschraubt. Die Mutter wird festgezogen, so dass sie das nicht dargestellte Anbauteil gegen ein hinteres Ende der Spreizhülse 4 beziehungsweise gegen die nicht dargestellte Fassadenplatte spannt. Dabei wird auch der Spreizanker 1 axial in der Hinterschneidung des Ankerlochs festgespannt. Beim Festziehen der Mutter wird die Spreizhülse 4 weiter in Richtung des Spreizkörpers 3 und die Spreizlaschen 8 weiter auf die Spreizflächen 10 geschoben, wodurch die Aufspreizung vergrößert beziehungsweise verstärkt wird.

Beim Drehen der nicht dargestellten Mutter auf dem Schraubengewinde 5 des Ankerschafts 2 und insbesondere beim Festziehen der Mutter übt die Mutter durch Reibung mit dem Schraubengewinde 5 ein Moment auf den Ankerschaft 2 aus, das der Ankerschaft 2 auf den drehfest mit ihm verbundenen Spreizkörper 3 überträgt. Dieses Moment ist so gerichtet, dass sich der Spreizkörper 3 in der Spreizhülse 4 beziehungsweise zwischen den Spreizlaschen 8 so dreht, dass sich die Spreizlaschen 8 der Spreizhülse 4 auf den Spreizflächen 10 des Spreizkörpers 3 von den Stufen 16 weg in Richtung äußerer Enden der Spreizflächen 10 verschieben. Das heißt, die Spreizlaschen 8 verschieben sich in Richtung der zweiten Steigung P der Spreizflächen 10 in der Umfangsrichtung, wo durch die Spreizlaschen 8 weiter beziehungsweise stärker aufgespreizt werden. Die Verankerung des Spreizankers 1 in dem hinterschnittenen Ankerloch wird dadurch verstärkt.

Bei den erfindungsgemäßen Spreizankern 1 ermöglicht das Aufspreizen der Spreizlaschen 8 sowohl durch die Axialbewegung der Spreizhülse 4 in Bezug zum Spreizkörper 3 als auch durch die Drehung der Spreizhülse 4 in Bezug zum Spreizkörper 3 ein Aufspreizen der Spreizlaschen 8 mit einem verhältnismäßig kurzen Axialweg der Spreizhülse 4 in Bezug zum Spreizkörper 3 beziehungsweise es verhindert ein Mitdrehen des Speizankers 1 im Bohrloch beim Aufschrauben der Mutter..

### Bezugszeichenliste

- a: erste Steigung in axialer Richtung
- P: zweite Steigung in Umfangsrichtung
- 1: Spreizanker
- 2: Ankerschaft
- 3: Spreizkörper
- 4: Spreizhülse
- 5: Schraubengewinde
- 6: Widerlager
- 7: Längsschlitz
- 8: Spreizlasche
- *9*: *frei*
- 10: Spreizfläche
- 11: Längsrand
- 12: vorderes Ende des Spreizkörpers 3
- 13: Drehwiderlager
- 14: vorderer Rand der Spreizlaschen 8
- 15: Dreh- und Schiebesicherungslasche
- 16: Stufe
- 17: Aussparung
- 18: Nut

## Patentansprüche

1. Spreizanker mit einem Spreizkörper (3), der eine Spreizfläche (10) mit einer ersten Steigung (α) in einer Achsrichtung aufweist, und mit einer Spreizhülse (4), an der durch Längsschlitze (7) oder Aussparungen (17) Spreizlaschen (8) gebildet sind, die durch Bewegen des Spreizkörpers (3) zwischen die Spreizlaschen (8) auf die Spreizfläche (10) des Spreizkörpers (3) bringbar und dadurch aufspreizbar sind, **dadurch gekennzeichnet, dass** der Spreizkörper (3) für jede Spreizlasche (8) eine räumlich abgesetzte, separate Spreizfläche (10) aufweist und dass die Spreizflächen (10) eine zweite Steigung (P) in einer Umfangsrichtung aufweisen, die der ersten Steigung (α) überlagert ist, so dass die Spreizlaschen (8) der Spreizhülse (4) auch durch eine Drehung der Spreizhülse (4) in Bezug auf den Spreizkörper (3) aufspreizbar sind.

2. Spreizanker nach Anspruch 1, **dadurch gekennzeichnet, dass** der Spreizanker (1) einen mit dem Spreizkörper (3) drehfesten Ankerschaft (2) mit einem Schraubengewinde (5) aufweist, dessen Gewindesteigung so gerichtet ist, dass eine Schraubbewegung auf dem Schraubengewinde (5) in Richtung des Spreizkörpers (3) durch Reibung am Schraubengewinde (5) ein die Spreizlaschen (8) aufspreizendes Moment auf den Ankerschaft (2) erzeugt.

3. Spreizanker nach Anspruch 1 oder 2, **dadurch gekennzeichnet, dass** der Spreizkörper (3) ein Drehwiderlager (13) für die Spreizhülse (4) aufweist, das die Drehung der Spreizhülse (4) in Bezug auf den Spreizkörper (3) entgegen einer Aufspreizdrehrichtung begrenzt.

4. Spreizanker nach Anspruch 3, **dadurch gekennzeichnet, dass** der Spreizkörper (3) eine Stufe an einem Übergang von einer Spreizfläche (10) zu einer benachbarten Spreizfläche (10) aufweist, die das Drehwiderlager (13) für die Spreizhülse (4) bildet.

5. Spreizanker nach einem oder mehreren der vorhergehenden Ansprüche, **dadurch gekennzeichnet, dass** die Spreizflächen (10) eine erste Steigung (α) von 10° in der Achsrichtung und/oder eine zweite Steigung (P) vom 0,068-fachen eines Nenndurchmessers des Spreizankers (1) in der Umfangsrichtung aufweisen.

6. Spreizanker nach einem oder mehreren der vorhergehenden Ansprüche, **dadurch gekennzeichnet, dass** die Spreizhülse (4) eine Dreh- und Schiebesicherungslasche (15) aufweist, die radial nach außen über eine Mantelfläche eines Grundkörpers der Spreizhülse (4) im Bereich der Dreh- und Schiebesicherungslasche (15) übersteht.

7. Verfahren zum Aufspreizen eines Spreizankers nach einem oder mehreren der Ansprüche 1 bis 6, **dadurch gekennzeichnet, dass** der Spreizanker (1) mit dem Spreizkörper (3) voraus in ein Ankerloch in einem Ankergrund eingebracht wird und dass die Spreizhülse (4) in Bezug zum Spreizkörper (3) axial in Richtung des Spreizkörpers (3) bewegt wird, so dass die Spreizlaschen (8) auf die Spreizflächen (10) des Spreizkörpers (3) gelangen, die die erste Steigung (α) aufweisen und aufgrund der axialen Bewegung des Spreizkörpers (3) relativ zur Spreizhülse (4) von den Spreizflächen (10) aufgespreizt werden.

8. Verfahren nach Anspruch 7, **dadurch gekennzeichnet, dass** das Ankerloch ein Sackloch ist, auf dessen Lochgrund der Spreizkörper (3) beim Aufspreizen der Spreizlaschen (8) aufsitzt.

9. Verfahren nach Anspruch 7 oder 8, **dadurch gekennzeichnet, dass** der Spreizanker (1) einen Ankerschaft (2) aufweist, der drehfest mit dem Spreizkörper (3) ist und der ein Schraubengewinde (5) aufweist, und dass eine Mutter auf dem Schraubengewinde (5) des Ankerschafts (2) in Richtung des Spreizkörpers (3) gedreht wird, derart, dass eine Gewindereibung zwischen der Mutter und dem Schraubengewinde (5) des Ankerschafts (2) ein Moment auf den Ankerschaft (2) bewirkt, das die Spreizlaschen (8) der Spreizhülse (4) auf den Spreizflächen (10) des Spreizkörpers (3) durch die zweite Steigung (P) der Spreizlaschen (8) in der Umfangsrichtung des Spreizkörpers (3) zusätzlich aufspreizt.

10. Verfahren nach einem oder mehreren der Ansprüche 7 bis 9, **dadurch gekennzeichnet, dass** das Ankerloch eine Hinterschneidung aufweist, in der beziehungsweise in die die Spreizlaschen (8) aufgespreizt werden.

11. Verfahren nach einem oder mehreren der Ansprüche 7 bis 10, **dadurch gekennzeichnet, dass** der Spreizkörper (3) zum Aufspreizen der Spreizlaschen (8) in der Aufspreizdrehrichtung in Bezug zur Spreizhülse (4) gedreht wird.

## Claims

1. Expansion anchor having an expansion body (3) which has an expansion surface (10) with a first pitch (α) in an axial direction, and having an expansion sleeve (4) on which expansion tabs (8) are formed by longitudinal slots (7) or recesses (17), which can be brought between the expansion tabs (8) onto the expansion surface (10) of the expansion body (3) by moving the expansion body (3) and can thus be expanded, **characterized in that** the expansion body (3) has a spatially offset, separate expansion surface (10) for each expansion tab (8) and **in that** the expansion surfaces (10) have a second pitch (P) in a circumferential direction which is superimposed on the first pitch (α), so that the expansion tabs (8) of the expansion sleeve (4) can also be expanded by rotating the expansion sleeve (4) with respect to the expansion body (3).

2. Expansion anchor according to claim 1, **characterized in that** the expansion anchor (1) has an anchor shaft (2) which is rotationally fixed to the expansion body (3) and has a screw thread (5), the thread pitch of which is directed such that a screwing movement on the screw thread (5) in the direction of the expansion body (3) generates, due to friction on the screw thread (5), a torque on the anchor shaft (2) which expands the expansion tabs (8).

3. Expansion anchor according to claim 1 or 2, **characterized in that** the expansion body (3) has a rotary abutment (13) for the expansion sleeve (4), which limits the rotation of the expansion sleeve (4) with respect to the expansion body (3) counter to an expansion rotation direction.

4. Expansion anchor according to claim 3, **characterized in that** the expansion body (3) has a step at a transition from one expansion surface (10) to an adjacent expansion surface (10), which step forms the rotary abutment (13) for the expansion sleeve (4).

5. Expansion anchor according to one or more of the preceding claims, **characterized in that** the expansion surfaces (10) have a first pitch (α) of 10° in the axial direction and/or a second pitch (P) of 0.068 times a nominal diameter of the expansion anchor (1) in the circumferential direction.

6. Expansion anchor according to one or more of the preceding claims, **characterized in that** the expansion sleeve (4) has a rotation and sliding locking tab (15) which protrudes radially outwards beyond a lateral surface of a base body of the expansion sleeve (4) in the region of the rotation and sliding locking tab (15).

7. Method for expanding an expansion anchor according to one or more of claims 1 to 6, **characterized in that** the expansion anchor (1) is introduced with the expansion body (3) first into an anchor hole in an anchor base and that the expansion sleeve (4) in relation to the expansion body (3) is moved axially in the direction of the expansion body (3), so that the expansion tabs (8) reach the expansion surfaces (10) of the expansion body (3), which have the first pitch (a), and are expanded by the expansion surfaces (10) due to the axial movement of the expansion body (3) relative to the expansion sleeve (4).

8. Method according to claim 7, **characterized in that** the anchor hole is a blind hole, on the hole base of which the expansion body (3) sits when the expansion tabs (8) are expanded.

9. Method according to claim 7 or 8, **characterized in that** the expansion anchor (1) has an anchor shaft (2) which is rotationally fixed to the expansion body (3) and which has a screw thread (5), and that a nut on the screw thread (5) of the anchor shaft (2) is rotated in the direction of the expansion body (3) such that thread friction between the nut and the screw thread (5) of the anchor shaft (2) causes a torque on the anchor shaft (2) which additionally expands the expansion tabs (8) of the expansion sleeve (4) on the expansion surfaces (10) of the expansion body (3) by the second pitch (P) of the expansion tabs (8) in the circumferential direction of the expansion body (3).

10. Method according to one or more of claims 7 to 9, **characterized in that** the anchor hole has an undercut in which the expansion tabs (8) are expanded.

11. Method according to one or more of claims 7 to 10, **characterized in that** the expansion body (3) is rotated in the expansion rotation direction in relation to the expansion sleeve (4) to expand the expansion tabs (8).

## Revendications

1. Boulon d'ancrage à expansion comportant un corps d'expansion (3) qui présente une surface d'expansion (10) comportant un premier pas (α) dans une direction axiale, et comportant une douille d'expansion (4), sur laquelle sont formées, par des fentes longitudinales (7) ou des évidements (17), des pattes d'expansion (8) qui peuvent être amenées, par déplacement du corps d'expansion (3) entre les pattes d'expansion (8), sur la surface d'expansion (10) du corps d'expansion (3) et peuvent ainsi être écartées, **caractérisé en ce que** le corps d'expansion (3) présente, pour chaque patte d'expansion (8), une surface d'expansion (10) séparée et spatialement décalée, **et en ce que** les surfaces d'expansion (10) présentent un second pas (P) dans une direction circonférentielle qui est superposé au premier pas (a), de sorte que les pattes d'expansion (8) de la douille d'expansion (4) peuvent également être écartées par une rotation de la douille d'expansion (4) par rapport au corps d'expansion (3).

2. Boulon d'ancrage à expansion selon la revendication 1,
**caractérisé en ce que** le boulon d'ancrage à expansion (1) présente une tige d'ancrage (2) solidaire en rotation du corps d'expansion (3) et comportant un filetage de vis (5) dont le pas de vis est orienté de telle sorte qu'un mouvement de vissage sur le filetage de vis (5) en direction du corps d'expansion (3) génère sur la tige d'ancrage (2), par frottement sur le filetage de vis (5), un couple écartant les pattes d'expansion (8).

3. Boulon d'ancrage à expansion selon la revendication 1 ou 2,
**caractérisé en ce que** le corps d'expansion (3) présente une butée de rotation (13) pour la douille d'expansion (4), laquelle butée limite la rotation de la douille d'expansion (4), par rapport au corps d'expansion (3), à l'encontre d'une direction de rotation d'expansion.

4. Boulon d'ancrage à expansion selon la revendication 3,
**caractérisé en ce que** le corps d'expansion (3) présente un étage au niveau d'une transition entre une surface d'expansion (10) et une surface d'expansion (10) adjacente qui forme la butée de rotation (13) pour la douille d'expansion (4).

5. Boulon d'ancrage à expansion selon l'une ou plusieurs des revendications précédentes, **caractérisé en ce que** les surfaces d'expansion (10) présentent un premier pas (α) de 10° dans la direction axiale et/ou un second pas (P) de 0,068 fois un diamètre nominal du boulon d'ancrage à expansion (1) dans la direction circonférentielle.

6. Boulon d'ancrage à expansion selon l'une ou plusieurs des revendications précédentes, **caractérisé en ce que** la douille d'expansion (4) présente une patte de blocage en rotation et en coulissement (15) qui fait saillie radialement vers l'extérieur au-delà d'une surface d'enveloppe d'un corps de base de la douille d'expansion (4), dans la zone de la patte de blocage en rotation et en coulissement (15).

7. Procédé permettant l'expansion d'un boulon d'ancrage à expansion selon l'une ou plusieurs des revendications 1 à 6, **caractérisé en ce que** le boulon d'ancrage à expansion (1) est introduit, avec le corps d'expansion (3) en avant, dans un trou d'ancrage se trouvant dans un fond d'ancrage, **et en ce que** la douille d'expansion (4) est déplacée axialement par rapport au corps d'expansion (3) en direction du corps d'expansion (3), de sorte que les pattes d'expansion (8) arrivent sur les surfaces d'expansion (10) du corps d'expansion (3), lesquelles présentent le premier pas (α) et sont écartées des surfaces d'expansion (10) en raison du mouvement axial du corps d'expansion (3) par rapport à la douille d'expansion (4).

8. Procédé selon la revendication 7, **caractérisé en ce que** le trou d'ancrage est un trou borgne sur le fond duquel le corps d'expansion (3) repose lors de l'écartement des pattes d'expansion (8).

9. Procédé selon la revendication 7 ou 8, **caractérisé en ce que** le boulon d'ancrage à expansion (1) présente une tige d'ancrage (2) qui est solidaire en rotation du corps d'expansion (3) et qui présente un filetage de vis (5), **et en ce qu'**un écrou est tourné sur le filetage de vis (5) de la tige d'ancrage (2) en direction du corps d'expansion (3), de telle sorte qu'un frottement de filetage entre l'écrou et le filetage de vis (5) de la tige d'ancrage (2) provoque un couple sur la tige d'ancrage (2) qui écarte en outre les pattes d'expansion (8) de la douille d'expansion (4) sur les surfaces d'expansion (10) du corps d'expansion (3) par le second pas (P) des pattes d'expansion (8) dans la direction circonférentielle du corps d'expansion (3).

10. Procédé selon l'une ou plusieurs des revendications 7 à 9,
**caractérisé en ce que** le trou d'ancrage présente une contre-dépouille dans lequel respectivement dans laquelle les pattes d'expansion (8) sont écartées.

11. Procédé selon l'une ou plusieurs des revendications 7 à 10, **caractérisé en ce que,** pour écarter les pattes d'expansion (8), le corps d'expansion (3) est mis en rotation dans la direction de rotation d'expansion par rapport à la douille d'expansion (4).
